# EUROPEAN PATENT SPECIFICATION

(11) **EP 2 589 575 B1**
(45) Date of publication and mention of the grant of the patent: **17.12.2014**
(21) Application number: 11800501.6
(22) Date of filing: 21.04.2011
(51) Int. Cl.: C03B 5/225, C03B 5/42

(54) **Vacuum degassing apparatus and vacuum degassing method for molten glass, and apparatus and process for producing glass products**
Vakuumentgasungsvorrichtung und Vakuumentgasungsverfahren für Glasschmelzen sowie Vorrichtung und Verfahren zur Herstellung von Glasprodukten
Appareil de dégazage sous vide et procédé de dégazage sous vide pour verre fondu, et appareil et prodédé de fabrication des produits en verre

(30) Priority: 30.06.2010 JP 2010149230
(43) Date of publication of application: 08.05.2013
(73) Proprietor: Asahi Glass Company, Limited, Tokyo 100-8405 (JP)
(72) Inventor: HAMAMOTO, Hiroaki, Tokyo 100-8405 (JP); NINOMIYA, Kazuo, Tokyo 100-8405 (JP); SASAKI, Michito, Tokyo 100-8405 (JP)
(74) Representative: Müller-Boré & Partner Patentanwälte PartG mbB
(86) International application number: PCT/JP2011/059863
(87) International publication number: WO 2012/002031

(56) References cited:
- WO-A1-2009/148028
- DE-A1- 3 430 429
- FR-A1- 2 327 204
- JP-A- 5 116 951
- JP-A- 11 139 834
- JP-A- 11 240 727
- JP-A- 2000 007 344
- JP-A- 2000 178 028
- JP-A- 2003 137 556
- JP-U- H0 712 448
- US-A- 1 872 477
- US-B1- 6 334 336

## Description

The present invention relates to a vacuum degassing apparatus and a vacuum degassing method for molten glass, and an apparatus and a process for producing glass products.

Heretofore, in order to improve the quality of formed glass products, a vacuum degassing apparatuses is employed for removing bubbles produced in a molten glass after a glass material is melted in a melting tank and before the molten glass is formed in a forming apparatus.

The vacuum degassing apparatus is an apparatus for making a molten glass pass through a vacuum degassing vessel inside of which is maintained to a predetermined vacuum degree, thereby growing bubbles contained in the molten glass in a relatively short time, making the bubbles move up to the surface of the molten glass by using a buoyant force of the bubbles grown to have a large size, and breaking the bubbles on the surface of the molten glass, to remove the bubbles from the molten glass with good efficiency.

In a glass-producing apparatus such as a vacuum degassing apparatus, a material constituting a vacuum degassing vessel defining a flow path of a molten glass, needs to be excellent in heat resistance and corrosion resistance against the molten glass. As a material satisfying such requirements, heretofore, a technique of constituting a vacuum degassing vessel employing refractory bricks such as electrocast bricks has been known (refer to Patent Document 1).

In the vacuum degassing vessel, a phenomenon called as bumping occurs in some cases due to a state change inside the vessel. This bumping means that a large amount of bubbles are produced inside or on the surface of a molten glass, and the bubbles move to the surface of the molten glass to form a thick layer of bubbles. For example, when the pressure inside the vacuum degassing vessel is not maintained within a predetermined range but the pressure decreases, or when the temperature of the molten glass fluctuates and rises to lower the viscosity of the molten glass, bumping tends to occur. Further, when the viscosity of the molten glass to be vacuum-degassed is low, bumping tends to be more easily caused by the above state change. It is usually difficult to prevent occurrence of bumping or to control the thickness of the bubble layer formed by the bumping.

When the bubble layer produced by bumping becomes thick, such a bubble layer tends to contact with an inner wall face that is not designed to contact with molten glass.

On the inner face of the vacuum degassing vessel constituted by refractory bricks, a portion in contact with molten glass (portion that is designed to contact with molten glass) is made of refractory bricks having particularly high corrosion resistance against molten glass. However, a portion not in contact with molten glass (portion that is not designed to contact with molten glass) is usually made of refractory bricks other than the above refractory bricks having particularly high corrosion resistance considering e.g. cost.

Refractory bricks employed for a portion in contact with molten glass are called as soldier refractories (or soldier blocks). As the soldier refractories, for example, electrocast bricks having high corrosion resistance against molten glass, are employed.

A portion of the vacuum degassing vessel including an upper portion of the side wall or the ceiling portion is called as a crown, and this portion does not usually contact with molten glass. Refractory bricks employed for this portion are called as crown refractories (or crown blocks). As the crown refractories, for example, combined bricks are employed. Accordingly, as described above, when the thickness of the bubble layer increases, not only a problem of lowering the efficiency of removing bubbles occurs, but also a problem that the bubble layer contacts with the inner face of the vacuum degassing vessel constituted by the crown refractories, occurs.

On the inner face of the vacuum degassing vessel constituted by crown refractories, components of molten glass (e.g. boron oxide or alkali metal oxide) evaporated from the molten glass are often adhered. When the bubble layer contacts with the surface of crown refractories, the bubble layer contact with these adhered components, whereby such adhered components tend to be mixed into the molten glass constituting the bubble layer. Further, since the crown refractories have relatively low corrosion resistance against molten glass, they tend to be corroded by the molten glass constituting the bubble layer, whereby the component of the crown refractories may be mixed into the molten glass of the bubble layer.

When bubbles in contact with a face constituted by crown refractories, are broken to form a molten glass, and the molten glass falls down from the wall face or flows down along the wall face and is mixed into a molten glass flowing in the vacuum degassing vessel, the above adhered components or the crown glass components are mixed into the molten glass.

Even if the adhered components are components originally derived from the molten glass, the composition in a portion of the molten glass wherein the adhered components are mixed, is changed, whereby a molten glass having an entirely homogeneous composition cannot be obtained. Accordingly, for example, when such a molten glass is formed into glass products, the glass products have portions of different refractive indexes due to inhomogeneity of the glass composition, whereby a problem such as distortion of transmitted image (so-called reams) occurs.

Further, when the components of the crown refractories are mixed into the molten glass, components that are not components constituting the molten glass, are mixed into the molten glass, which may cause deterioration of the quality of glass products.

Under the circumstances, a vacuum degassing apparatus is proposed, which has a branched vacuum housing provided on a side portion of a vacuum degassing vessel, the pressure inside of the branched vacuum housing is adjusted to be the same vacuum degree as that of the vacuum degassing vessel in order to introduce a bubble layer of molten glass into the branched vacuum housing side when the above large amount of bubbles are generated, and the apparatus is also provided with a bubble layer-removing means for removing the introduced bubble layer and accommodating the layer (refer to Patent Document 2).
Patent Document 1: JP-A-11-139834
Patent Document 2: JP-A-2000-178028

US-patent 6,334,336 B1 discloses a vacuum degassing apparatus for molten glass, DE 34 30 429 A1 discloses a glass melting furnace.

In the vacuum degassing apparatus disclosed in Patent Document 2, usually, in order to prevent the above bumping phenomenon, a monitoring window is provided on the ceiling portion of the vacuum degassing vessel to monitor the state of the molten glass, and fine adjustment of the pressure in the vessel or a temperature control of molten glass are carried out. However, even when the vacuum degassing apparatus is in a state of stationary operation, a slight variation of the pressure in the vessel or a slight temperature difference of molten glass may cause rapid growth of bubbles to cause the above bumping, which may cause deterioration of the quality of glass products or generation of reams.

Further, when the structure wherein the branched vacuum housing is provided on the side portion of the vacuum degassing vessel is employed, the structure of the vacuum degassing vessel tends to be complicated, whereby the apparatus cost becomes high. Further, by providing the branched vacuum housing, bubbles generated in the vicinity of the surface of molten glass can be removed, but when a thick bubble layer is generated by bumping, it may not be possible to avoid contact of the bubble layer with the side wall or the sealing constituted by crown refractories. Accordingly, there has been a problem that such a structure cannot solve the above problems caused by the bubble layer in contact with the surface of the crown refractories.

Under the circumstances, it is an object of the present invention to provide a vacuum degassing apparatus which does not return the molten glass of the bubble layer in contact with the face of the crown refractories into the molten glass in the vacuum degassing vessel even in a case where a thick bubble layer is generated by a phenomenon such as bubbling and the bubble layer contact with the face of the refractory bricks, and accordingly, which can perform vacuum degassing without deteriorating composition homogeneity of the molten glass.

It is another object of the present invention to provide a vacuum degassing method for molten glass, which can perform vacuum degassing without deteriorating composition homogeneity of molten glass by employing the above vacuum degassing apparatus.

It is another object of the present invention to provide an apparatus and a method for producing glass products of high quality by employing the above vacuum degassing apparatus.

The present invention is characterized by a vacuum degassing which comprises a vacuum housing, the inside of which is evacuated to be in a reduced pressure state; a vacuum degassing vessel provided in the vacuum housing and for carrying out vacuum degassing of a molten glass; a feed-in mechanism for feeding a molten glass into the vacuum degassing vessel; and a feed-out mechanism for feeding out a degassed molten glass to a subsequent step;
wherein the vacuum degassing vessel comprises a bottom wall portion, a side wall portion and a ceiling portion, that define a molten glass-accommodating portion and an upper space, a wall face defining the molten glass-accommodating portion is constituted by a combination of a plurality of soldier refractories having high corrosion resistance against molten glass, and a side wall defining the upper space is constituted by a combination of a plurality of crown refractories;
wherein among the above plurality of crown refractories, a crown refractory provided on an upper face of such a soldier refractory constituting an upper end of the wall face defining the molten glass-accommodating portion, is disposed so that a lower portion of a face of the crown refractory facing to the inside of the vacuum degassing vessel is positioned more outside than the position of a molten-glass-contact surface of the soldier refractory, and that a storage portion for molten glass is formed between the upper face of the soldier refractory and a lower portion of the crown refractory disposed on the soldier refractory; and
wherein a discharge path for molten glass communicating with the storage portion and the outside of the vacuum degassing vessel, is formed in at least one of a portion of the soldier refractory and a portion of the crown refractory.

In the vacuum degassing apparatus of the present invention, a bank portion is formed on the edge of the storage portion formed on the upper face of the soldier refractory, facing the molten glass-accommodating portion.

In the vacuum degassing apparatus of the present invention, it is preferred that a groove communicating with the storage portion and the outside of the vacuum degassing vessel, is formed in each of the upper face portion of the soldier refractory on which the crown refractory is disposed and the lower face portion of the crown refractory, and both of the grooves communicate with each other to constitute the discharge path of molten glass.

In the vacuum degassing apparatus of the present invention, it is preferred that the crown refractory facing the storage portion has a lower part having an inner face descending toward the outside of the vacuum degassing vessel, and an end of the discharge path opens at a portion where the inner wall meets the soldier refractory.

In the vacuum degassing apparatus of the present invention, it is preferred that the groove formed in the upper face side of the soldier refractory is a rectangular groove having a rectangular cross section, and the groove formed in the lower face side of the crown refractory is a circular groove having a semicircular cross section having a width larger than the width of the rectangular cross section.

In the vacuum degassing apparatus of the present invention, it is preferred that the discharge path of molten glass is formed so as to keep away from a joint portion formed between adjacent soldier refractories.

In the vacuum degassing apparatus of the present invention, it is preferred that a joint-portion cover is disposed on a surface portion of a joint portion between the soldier refractories, in the storage portion formed on the upper face of the soldier refractories.

In the vacuum degassing apparatus of the present invention, it is preferred that the storage portion formed on the upper face of the soldier refractory has a slope face descending toward the outside of the vacuum degassing vessel.

In the vacuum degassing apparatus of the present invention, it is preferred that a pocket portion for receiving a molten glass discharged through the discharge path, is formed on the outside of the soldier refractory.

The vacuum degassing method of the present invention is characterized by employing any one of the above vacuum degassing apparatuses.

The vacuum degassing method of the present invention preferably comprises discharging a bubble layer produced in the vacuum degassing vessel to the outside of the vacuum degassing vessel.

The apparatus for producing glass products of the present invention is characterized by comprising any one of the above vacuum degassing apparatus; a melting means provided on the upstream side of the vacuum degassing apparatus and for melting a glass material to produce a molten glass; a forming means provided on the downstream side of the vacuum degassing apparatus and for forming the molten glass; and an annealing means for annealing the formed glass.

The process for producing glass products of the present invention is characterized by comprising a step of applying a degassing treatment to a molten glass by any one of the above vacuum degassing apparatus; a melting step of melting a glass material on the upstream side of the vacuum degassing apparatus to produce a molten glass; a forming step of forming the molten glass on the downstream side of the vacuum degassing apparatus; and an annealing step of annealing the formed glass.

The process for producing glass products of the present invention preferably comprises a step of applying a degassing treatment to a molten glass by any one of the above vacuum degassing apparatus; a melting step of melting a glass material on the upstream side of the vacuum degassing apparatus to produce a molten glass; a forming step of forming the molten glass on the downstream side of the vacuum degassing apparatus; and an annealing step of annealing the formed glass; the process further comprising discharging a bubble layer produced in the vacuum degassing vessel in the step of applying a degassing treatment to the molten glass, to the outside of the vacuum degassing vessel.

In the present invention, while a molten glass is vacuum-degassed in a vacuum degassing vessel, even if e.g. bumping occurs to generate a large number of bubbles to form a thick bubble layer and the bubble layer reaches a surface of crown refractories on the side wall or the ceiling portion of the vacuum degassing vessel, and even if the bubble layer in contact with the surface of the crown refractories is broken to be a molten glass and the molten glass flows down along the crown refractories, it is possible to lead the flown-down molten glass to a storage portion on soldier refractories, and to discharge the molten glass through a discharge path communicating with the storage portion, to the outside of the vacuum degassing vessel. Accordingly, the molten glass flown down along the surface of the crown refractories does not return to a molten glass in a molten glass-accommodating portion of the vacuum degassing vessel. Namely, since e.g. components adhered to the crown refractories are not mixed into the molten glass flowing in the vacuum degassing vessel, it is possible to feed a homogeneous molten glass to a subsequent step. Accordingly, in the subsequent step, it is possible to produce glass products by using a homogenous molten glass, and to produce glass products of high quality which does not cause generation of e.g. reams.

Since the present invention employs a storage portion provided on an upper face of soldier refractories and a structure for leading a molten glass from the storage portion into a discharge path, even if a large amount of molten glass flows down along a crown refractory surface, it is possible to receive the molten glass once in the storage portion and to lead the molten glass into the discharge path, and accordingly, it is possible to securely lead the molten glass in an amount within the capacity of the storage portion into the outside of the vacuum degassing vessel to discharge the molten glass. Accordingly, by setting the capacity of the discharge portion sufficiently large, even if a bumping phenomenon occurs unexpectedly radically to produce a particularly thick bubble layer, a molten glass in the bubble layer do not return to molten glass flowing in the vacuum degassing vessel.

By constituting the discharge path of molten glass by a groove formed in a crown refractory and a groove formed in a soldier refractory so as to communicate with each other, it is possible to constitute a discharge path having as large flow path cross-sectional area as possible without significantly deteriorating the strengths of the crown refractory and the soldier refractory. Accordingly, even if a large bubble layer is generated and bubbles in contact with the crown refractories increase and even if a large amount of molten glass flows along a surface of the crown refractories, it is possible to discharge the molten glass with a margin.

In the present invention, by forming a discharge path of molten glass in a portion other than a joint portion of soldier refractories, it is possible to securely discharge a molten glass through the discharge path to the outside of the vacuum degassing vessel without worrying about corrosion of the joint portion by the molten glass.

When the joint portion of the soldier refractories in the storage portion is covered by a joint-portion cover, it is possible to protect the joint portion of the soldier refractories in the storage portion, and to prevent corrosion of the joint portion. Since it is possible to prevent corrosion of the joint portion in the storage portion by the presence of the joint-portion cover, it is possible to reduce a risk that a molten glass flowing in the storage portion leaks out through the joint portion to be mixed into a molten glass flowing in the vacuum degassing vessel.

In the present invention, by constituting a pocket portion communicating with the discharge path on the outside of the soldier refractories, it is possible to receive a molten glass discharged through the discharge path in the pocket portion.
Fig. 1 is a construction view showing a schematic vertical cross-sectional structure along a line connecting an uprising pipe and a downfalling pipe in an example of a vacuum degassing apparatus according to the present invention, and a forming apparatus connected to the vacuum degassing apparatus.
Fig. 2 is a schematic plan view showing an uppermost face of soldier refractories in a vacuum degassing vessel.
Fig. 3 is a construction view showing a portion of the vacuum degassing vessel where soldier refractories are joined with crown refractories.
Fig. 4 is a construction view showing a discharge path formed in a portion where a soldier refractory is joined with a crown refractory.
Fig. 5 is a schematic perspective view showing a portion of the vacuum degassing vessel where soldier refractories are jointed with crown refractories, and a storage portion.
Fig. 6 is a construction view showing another example of a portion of the vacuum degassing vessel where soldier refractories are jointed with crown refractories.
Fig. 7 is a flow chart illustrating a process for producing glass products in the
order of steps.

Now, an embodiment of the vacuum degassing apparatus for molten glass according to the present invention will be described, but the present invention is not limited to the embodiments described below.

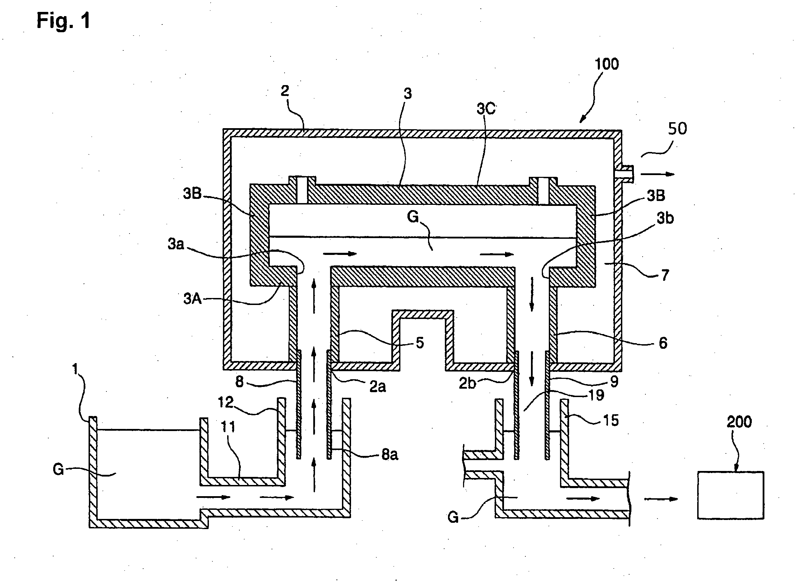

Fig. 1 is a cross-sectional view schematically showing an example of the structure of a vacuum degassing apparatus according to the present invention. A vacuum degassing apparatus 100 shown in Fig. 1 is an apparatus to be employed for a process for vacuum-degassing a molten glass G supplied from a melting tank 1 and continuously feeding the vacuum-degassed molten glass G to a forming apparatus 200 for a subsequent step.

The vacuum degassing apparatus 100 of this embodiment has a vacuum housing 2 made of a metal such as a stainless steel, inside of which can be maintained in a reduced pressure state at a time of operation. In the vacuum housing 2, a vacuum degassing vessel 3 is accommodated and disposed so that its longitudinal axis is in the horizontal direction. To a lower face of an end of the vacuum degassing vessel 3, an uprising pipe (feed-in pipe) 5 extending in the vertical direction is connected via an introduction port 3a, and to a lower face of the other end, a downfalling pipe (feed-out pipe) 6 extending in the vertical direction is connected via an exit port 3b. The uprising pipe 5 and the downfalling pipe 6 are disposed so as to communicate with the outside through the introduction port 2a and the exit port 2b, respectively, formed on the bottom side of the vacuum housing 2. Further, a heat insulating material 7 is filled between the vacuum housing 2 and an internal structure constituted by the vacuum degassing vessel 3, the uprising pipe 5 and downfalling pipe 6.

Through the ceiling portion 3C of the vacuum degassing vessel 3, vent holes are provided, the heat insulating material 7 has a permeability, and the vacuum housing 2 is provided with a suction port 50. Accordingly, by vacuum-suctioning through the suction port 50, it is possible to produce a reduced-pressure atmosphere in the vacuum housing 2 and in the vacuum degassing vessel 3.

The uprising pipe 5 communicates with a bottom portion of an end of the vacuum degassing vessel 3, and is configured to introduce a molten glass G from the melting tank 1 into the vacuum degassing vessel 3. For this purpose, to the lower end of the uprising pipe 5, an outer pipe 8 for extension is attached, the lower end 8a of the outer pipe 8 is inserted into an open end of an upstream pit 12 connected to the melting tank 1 via a conduit 11, and the lower end 8a of the outer pipe 8 is immersed in a molten glass G in the upstream pit 12. The downfalling pipe 6 communicates with a bottom portion of the other end of the vacuum degassing vessel 3, which feeds out a vacuum-degassed molten glass G to an apparatus of subsequent step. For this purpose, to a lower end of the downfalling pipe 6, an outer pipe 9 for extension is attached, and the lower end of the outer pipe 9 is inserted into an open end of a downstream pit 15 and is immersed in a molten glass G in the downstream pit 15. Further, to a downstream side of the downstream pit 15, a forming apparatus 200 is connected.

In the vacuum degassing apparatus 100 described above, the uprising pipe 5 constitutes a feed-in mechanism of molten glass, and the downfalling pipe 6 constitutes a feed-out mechanism of molten glass.

The internal space of the vacuum degassing vessel 3 preferably has a generally flat rectangular solid shape, and its outer shape is also preferably a flat rectangular solid shape. The molten glass generally flows in the bottom portion of the internal space from the introduction port 3a toward the exit port 3b, and the length of the rectangular solid in the flow direction of molten glass preferably equal or longer than the length in a direction (width direction) perpendicular to the flow direction. However, the ceiling portion preferably has a shape having slopes in its peripheral portions rather than a horizontally flat shape. For example, a cross-section of the vacuum degassing vessel 3 in a direction perpendicular to the longitudinal direction (direction connecting the introduction port 2a and the exit port 2b) is preferably a shape such as an arc shape, an ellipsoidal shape, a triangular shape having no bottom side or a trapezoidal shape having no bottom side. In any of these cross-sectional shapes, left and right end portions are inclined from a horizontal line. The internal faces in both end portions in the longitudinal direction of the vacuum degassing vessel 3 are preferably upright walls substantially in the vertical direction or walls inclined from the vertical direction. The entire shape of the ceiling portion is preferably a dome shape, a semicylindrical shape, a hipped roof shape, a gable roof shape, a hipped gable roof shape, a penthouse roof shape, a square roof shape, etc.

The molten glass-accommodating portion in the vacuum degassing vessel 3 is defined by a bottom wall portion 3A and a peripheral wall portion 3B. An upper space in the vacuum degassing vessel 3 is defined by a ceiling portion 3C and the peripheral wall portion 3B. The upper space may be defined by the ceiling portion 3C alone. In Fig. 1, the peripheral wall portion 3B is separated into a portion under the surface of molten liquid G and a portion above the surface. In this case, the molten glass-accommodating portion is a portion defined by the peripheral wall portion 3B under the surface of molten glass G and the bottom wall portion 3A, and the upper space is a portion defined by the peripheral wall portion 3B above the surface of molten glass G and the ceiling portion 3C. The ceiling portion 3C may be directly contact with the uppermost face of soldier refractories constituting the peripheral wall portion 3B under the surface of molten glass G, and in this case, the portion of the uppermost face of the soldier refractories directly in contact with the ceiling portion 3C may be the entire circumference of the ceiling portion 3C or it may be a part of the entire circumference of the ceiling portion 3C.

In the vacuum degassing apparatus 100 having the above structure, the wall face of the molten glass-accommodating portion of the vacuum degassing vessel 3 to which the molten glass contacts, is constituted by surfaces of soldier refractories, and an upper space wall face to which the molten glass does not contact is constituted by surfaces of crown refractories. Further, the uprising pipe 5 and the downfalling pipe 6 each has a hollow tube structure constituted by bricks having high corrosion resistance like soldier refractories, or has a hollow tube structure at least whose inner face is constituted by a corrosion-resistant metal (such as platinum or a platinum alloy).

In a case where the uprising pipe 5 and the downfalling pipe 6 are each a hollow tube made of refractory bricks, the uprising pipe 5 and the downfalling pipe 6 are each preferably a hollow tube having a circular cross section or a polygonal cross section including a rectangular cross section made of refractory bricks, and its internal cross-sectional shape forming a flow path of molten glass preferably has a circular cross section.

When the uprising pipe 5 and the downfalling pipe 6 are each a hollow tube of a corrosion-resistant metal, the inner cross-sectional shape forming a flow path of molten glass in the uprising pipe 5 or the downfalling pipe 6 is preferably a circular shape or an elliptical shape. The outer pipes 8 and 9 are preferably each a hollow tube made of a corrosion-resistant metal. When the uprising pipe 5 and the downfalling pipe 6 are each a hollow tube made of a corrosion-resistant metal, the structure may be such that the uprising pipe 5 and the downfalling pipe 6 extend to be integrated with the portions referred to as the outer pipes 8 and 9, respectively, in Fig. 1, without separately providing the outer pipes 8 and 9 for extension.

The soldier refractories are bricks made of a refractory material having particularly high corrosion resistance against molten glass, and the particularly preferably bricks made of electrocast refractories. For example, bricks made of high zirconia electrocast refractories, high alumina electrocast refractories or alumina-zirconia-silica electrocast refractories, may be mentioned. Among them, bricks made of high zirconia electrocast refractories are particularly preferred.

The above crown refractories have relatively low corrosion resistance against molten glass, but they are bricks made of a refractory material for glass-melting furnace considering cost and corrosion resistance, which are bricks made of bonded refractories or electrocast refractories. For example, bricks made of e.g. zirconia bonded refractories, alumina-zirconia bonded refractories, alumina bonded refractories, silica bonded refractories or clay refractories, may be mentioned.

When the outer pipes 8, 9 etc. are made of a corrosion-resistant metal, the corrosion-resistant metal is preferably platinum or a platinum alloy. An example of such platinum alloy may be a platinum-gold alloy or a platinum-rhodium alloy. "Platinum" or "platinum alloy" in this document includes a reinforced platinum that is a platinum or a platinum alloy in which a metal oxide is dispersed. Such a metal oxide to be dispersed may be a metal oxide of Group 3, Group 4 or Group 13 in the long periodic table, such as Al₂ O₃, ZrO₂ or Y₂ O₃.

Next, the detail structure of the vacuum degassing vessel 3 of the vacuum degassing apparatus 100 will be described.

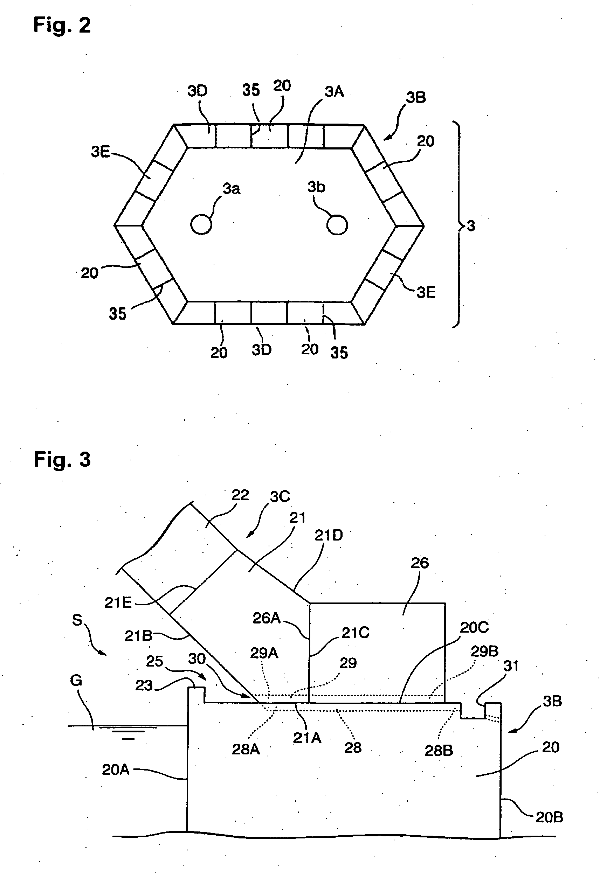

Fig. 2 is a plan view showing the uppermost face of soldier refractories 20 constituting the peripheral wall portion 3B of the vacuum degassing vessel 3, which shows an example of arrangement of the soldier refractories 20 in the vacuum degassing vessel 3. Here, a lower discharge groove 28 formed in the uppermost face of the soldier refractories 20 is not shown. The peripheral wall portion 3B of the molten glass-accommodating portion of the vacuum degassing vessel 3 of this embodiment, has a race track shape constituted by a pair of parallel wall portions 3D, and narrowing portions 3E each having a narrowing shape in plan view connected to respective ends of the parallel wall portions 3D. Then, to an introduction port 3a of a bottom wall portion 3A inside one narrowing portion 3E, an uprising pipe 5 is connected, and to an exit port 3b of the bottom wall portion 3A inside the other narrowing portion 3E, a downfalling pipe 6 is connected.

In the embodiment shown in Fig. 2, the parallel wall portions 3D and the narrowing portions 3E are constituted by a plurality of soldier refractories 20 each having a rectangular block shape, that are joined together. Namely, the uppermost portion of soldier refractories in the peripheral wall portion 3B in the vacuum degassing vessel 3, is constituted by a plurality of soldier refractories 20 each having a rectangular block shape and arranged along the circumferential direction, that are joined via joint portions 35. Here, in each portion where the soldier refractories 20 are joined, the tilt direction and the size of an end face of each soldier refractory 20 facing a joint portion 35 are appropriately set according to the shape of an objective peripheral wall portion 3B. Fig. 2 shows only an example of them, and they are not particularly limited in the present invention. Further, with respect to the number, the size and the shape of soldier refractories 20 constituting the peripheral wall portion 3B of the vacuum degassing vessel 3, Fig. 2 shows an example, and it is of course possible to apply refractory bricks having optional number and the size according to the size and the shape of the vacuum degassing vessel 3.

The vacuum degassing vessel 3 of this embodiment has a ceiling portion 3C having a tilted portion that is joined with the peripheral wall portion 3B, and the cross-sectional shape of the ceiling portion 3C in a direction perpendicular to the cross-section of Fig. 1 has, for example, a dome shape. The ceiling portion 3C is directly joined with the upper face of soldier refractories 20 in the uppermost portion of the parallel wall portions 3D that are each a part of the peripheral wall portion 3B. The ceiling portion 3C is constituted by a plurality of crown refractories. Fig. 3 is a construction view showing a portion of the ceiling portion 3C directly joined with the upper face of the soldier refractories 20 in the uppermost portion of the parallel wall portion 3D. In Fig. 3, a molten glass G flows generally in the front-back direction of this document.

Fig. 3 illustrates the structure of a portion where a soldier refractory 20 in the upper end portion of a portion of a peripheral wall portion 3B in contact with molten glass, is joined with a crown refractory 21 in a lower end of a ceiling portion 3C, in a vacuum degassing vessel 3 of this embodiment. In this portion, the peripheral wall portion 3B is constituted by soldier refractories 20, and on its peripheral wall portion 3B, a crown refractory 21 of the ceiling portion 3C is directly joined.

Here, Fig. 3 shows only a portion of the peripheral wall portion 3B and a portion of the ceiling portion 3C of the vacuum degassing vessel 3. With respect to the ceiling portion 3C, on the crown refractory 21 disposed on the soldier refractory 20, other crown refractories 22 are further piled up one after another to constitute the ceiling portion 3C having, for example, a dome shape as an entire shape. Further, with respect to soldier refractories 20 constituting the peripheral wall portion 3B, the number of the refractories piled up in the vertical direction may be optional according to the depth of the peripheral wall portion 3, and with respect to the thickness, the peripheral wall portion 3B may have a multilayer structure according to the size of the peripheral wall portion 3.

Such a soldier refractory 20 constituting the upper portion of the peripheral wall portion 3B has a rectangular block shape as shown in Fig. 3 in this embodiment, and the soldier refractory 20 has an inside face 20A in contact with molten glass G accommodated in the vacuum degassing vessel 3, an outside face 20B constituting an outer face of the vacuum degassing vessel 3, and an upper face 20C connecting the upper edges of the inside face and the outside face.

A crown refractory 21 disposed on the soldier refractory 20, is formed into a pentagonal block shape in side view having a bottom face 21 A, an inside face 21 B, a lower outside face 21 C, an upper outside face 21 D and an upper face 21 E as shown in Fig. 3.

The crown refractory 21 is disposed on the soldier refractory 20 so that the bottom face 21 A is disposed on the upper face of the soldier refractory 20, its inside face 21 B extending in an oblique upward direction from the inside edge of the bottom face 21 A (inside edge of the vacuum degassing vessel 3) is downwardly tilted with respect to the upper face of the soldier refractory 20, its lower outside face 21C substantially vertically extending from the outside edge of the bottom face 21 A (outside edge of the vacuum degassing vessel 3) is vertical to the upper face of the soldier refractory 20, the crown refractory 21 has an upper outside face 21 D extending in an oblique upward direction from the upper edge of the lower outside face 21C, and that its upper face 21 E connecting the upper edge of the inside face 21 B and the upper edge of the upper outside face 21 D is substantially perpendicular to the extending direction of the ceiling portion 3C. On this crown refractory 21, other plurality of block-shaped crown refractories 22 are further piled up, so that the structure shown in Fig. 3 is continuously constituted on the entire circumference of the peripheral wall portion 3B of the vacuum degassing vessel 3.

The soldier refractory 20 shown in Fig. 3 is a soldier refractory in the uppermost portion of the peripheral wall portion 3B constituting the molten glass-accommodating portion, and the crown refractory 21 shown in Fig. 3 is a crown refractory in the lowermost portion of the ceiling portion 3C constituting the upper space. In a portion other than the portion shown in Fig. 3, the crown refractory 21 may be a crown refractory in the lowermost portion of the peripheral wall portion 3B constituting the upper space. A group of the soldier refractories 20 arranged in the horizontal direction constitute the uppermost portion of the peripheral wall portion 3B of the molten glass-accommodating portion shown in Fig. 2, and a group of the plurality of crown refractories 21 ··· and 22 ··· constitute the peripheral wall portion 3B or the ceiling portion 3C constituting the upper space.

By the structure described above, the vacuum degassing vessel 3 is defined by the bottom wall portion 3A, the peripheral wall portion 3B and the ceiling portion 3C, a molten glass-accommodating portion in which molten glass G is present is defined in a lower portion inside the vacuum degassing vessel 3, and, an upper space S is defined in the upper portion in the vacuum degassing vessel 3.

Here, with respect to the ceiling of the vacuum degassing vessel 3, at least the lower inner face of the ceiling portion 3C of the vacuum degassing vessel 3 is preferably constituted by tilted faces of the crown refractories 21··· and 22···. Further, the ceiling portion 3C may have such a structure that crown refractories disposed on the soldier refractories 20 and the vicinity of such crown refractories are not tilted to form a vertically upright wall, and the rest of the ceiling portion 3C is connected with the soldier refractories 20 via such crown refractories. In this case, an upper discharge groove is formed in such a wall-shaped crown refractory disposed on the soldier refractories 20. Namely, the ceiling portion 3C is not necessarily entirely tilted, but it is sufficient that the ceiling portion 3C has such a structure that in the faces of the ceiling portion and the peripheral wall portion including a vertical face, that constitute the upper space, at least a lower face close to the molten glass-accommodating portion as a whole allows molten glass to flow down. The concept of the structure of the ceiling portion 3C includes a structure having a non-tilted portion. The structure of the ceiling portion except the peripheral wall portion may be any shape such as a ceiling having a dome-shaped structure, a ceiling having a semicylindrical structure, a ceiling having a hipped roof structure, a ceiling having a gable roof structure, a ceiling having a hipped gable roof structure, a ceiling having a penthouse roof structure or a ceiling having a square roof structure. Further, in an uppermost portion of the ceiling portion to which no bubble layer usually contacts even if a thick bubble layer is formed, a flat face may be present.

Along the molten glass-side edge portion on the upper face of the uppermost soldier refractories 20, a ridge projecting upwardly from the upper face of the soldier refractories 20 is provided to form a bank portion 23, and such a bank portion 23 is formed to cover the entire width of each soldier refractory 20. Further, a bottom face 21A of each crown refractory 21 is disposed slightly outside from the bank portion 23-forming position with a space, whereby a storage portion 25 of molten glass is formed on the upper face of the soldier refractory between the lower portion of the inside face 21 B of the crown refractory 21 and the bank portion 23.

On the outside of the crown refractory 21 on the upper face of the soldier refractory 20, a receiving refractory 26 having a rectangular block-shaped cross-section is disposed so that its inner face 26A contacts with the lower outside face 21 C of the above crown refractory 21. Here, the receiving refractory 26 is usually a brick made of a material similar to that of the crown refractory.

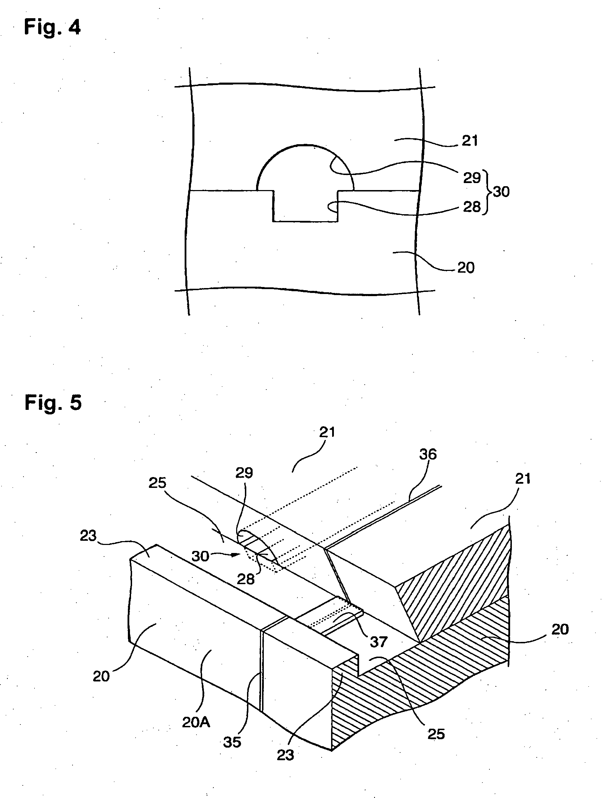

In a boundary portion between the soldier refractory 20 and the crown refractory 21 or the receiving refractory 26 disposed on the soldier refractory 20, a discharge path 30 of molten glass constituted by a lower discharge groove 28 having a rectangular cross-section and an upper discharge groove 29 having a semicircular cross-section, are formed as shown in Fig. 4.

The lower discharge groove 28 is formed in the upper face of the soldier refractory 20 so as to extend from the inside of the vacuum degassing vessel 3 toward the outside (along the thickness direction of the soldier refractory 20), one end 28A of the groove reaches the storage portion 25, and the other end 28B reaches the end side of the soldier refractory positioned outside the peripheral wall portion 3B. The upper discharge groove 29 is formed in the lower faces of the crown refractory 21 and the receiving refractory 26 so as to extend from the inside of the vacuum degassing vessel 3 toward the outside, and one end 29A of the groove reaches the storage portion 25, and the other end 29B extends to the end of the soldier refractory 20 on the outside the peripheral wall portion 3B.

These lower discharge groove 28 and the upper discharge groove 29 are formed in the upper face side of the soldier refractory 20 and the lower face side of the crown refractory 21 so as to be aligned in the vertical and lateral directions to be integrated to have a mushroom-shaped cross-section as shown in Fig. 4. Further, these grooves are formed so that the width of the upper discharge groove 29 is slightly larger than the width of the lower discharge groove 28. The bottom face of the lower discharge groove 28 is preferably a slope face descending from the inside of the soldier refractory 20 toward the outside. By forming the bottom face of the lower discharge groove 28 to be such a slope face, it is possible to discharge a molten glass flown into the lower discharge groove 28 easily and securely toward the outside the vacuum degassing vessel 3.

The cross-sectional area of the flow path of the discharge path 30 is set to be a area sufficient for discharging a molten glass caused by generation of a bubble layer to be described later and flowing down along the wall face of the ceiling portion 3C or the peripheral wall portion 3B and reaching the storage portion 25 of the soldier refractory 20. Accordingly, for example, the lower discharge groove 28 and the upper discharge groove 29 are each formed to have a lateral width of about tens of millimeters and a height of a tens of millimeters. The groove widths of the lower discharge groove 28 and the upper discharge groove 29 are preferably, for example, at least 10 times the width of the joint portion 35 of the soldier refractory 20, more preferably at least 30 times from the viewpoint of obtaining a discharge capacity of molten glass.

Here, as the cross-sectional area of the flow path of the discharge path 30 increases, the discharge capacity of molten glass improves, but if the size of the discharge path 30 is unnecessarily increased, the strength of the crown refractory 21 and the soldier refractory 20 may decrease. For this reason, it is preferred to form the discharge path 30 having a double structure constituted by the lower discharge groove 28 and the upper discharge groove 29, in order to suppress as much as possible lowering of the strength due to the lower discharge groove 28 formed in the soldier refractory 20 and lowering of the strength due to the upper discharge groove 29 formed in the crown refractory 21. For example, rather than forming both of the lower discharge groove 28 and the upper discharge groove 29 in one of the crown refractory 21 and the soldier refractory 20, by forming them in respective refractories, it is possible to form a discharge path 30 having a necessary cross-sectional area of flow path without causing significant strength drop of the crown refractory 21 or the soldier refractory 20 to obtain the same cross-sectional area of flow path.

Next, in the outside edge portion on the upper face of the soldier refractory 20, a thin pocket portion 31 is formed so as to cover the entire width of the soldier refractory 20, and the other end of the lower discharge groove 28 communicates with the pocket portion 31. Here, the pocket portion 31 is preferably formed in every soldier refractory 20 constituting the vacuum degassing vessel 3, and in such a construction, the pocket portion 31 is formed to encompass the entire circumference of the vacuum degassing vessel 3. This construction allows a molten glass discharged from each discharge path 30 located in any portion in the entire circumference of the vacuum degassing vessel 3, to be received and reserved in any one of such pocket portions 31. Of course, such a pocket portion 31 is not essential, but as an alternative, a means such as an additional flow path or a receiving portion may be provided to reserve or discharge a molten glass discharged from the discharge path 30 to the pocket portion 31.

Fig. 5 is a schematic perspective view of a portion where a soldier refractory 20 is joined with a crown refractory 21 and its vicinity observed from the inside of the vacuum degassing vessel 3.

As shown in Fig. 5, soldier refractories 20, 20 arranged so as to be adjacent to each other in left-right direction are joined via a joint portion 35, and crown refractories 21, 21 arranged so as to be adjacent to each other in left-right direction are also joined via a joint portion 36. Thus, a plurality of such soldier refractories 20 are joined via joint portions 35 in lateral direction to constitute a peripheral wall portion 3B of a molten glass-accommodating portion of the vacuum degassing vessel 3, and a plurality of crown refractories 21 are also joined in lateral direction via joint portions 36 to constitute a ceiling portion 3C and a part of the peripheral wall portion 3B of the upper space.

As shown in Fig. 5, on a joint portion 35 in a storage portion 25 on the upper face of the soldier refractories 20, 20 a joint-portion cover 37 made of a refractory brick is disposed. This joint-portion cover 37 is formed into a block shape having a size covering from a portion close to the bank portion 25 to the back end of the storage portion 25, and covers a portion of the joint portion 35 corresponding to the storage portion 25 as shown in Fig. 5. The joint-portion cover 37 may be provided so as to extend to cover the storage portion 25-side of a joint portion 35 in the bank portion 23 or a lower part of a joint portion 36 between the crown refractories.

Here, Fig. 5 shows a discharge path 30 constituted by the above lower discharge groove 28 and the upper discharge groove 29, that reaches and opens to the storage portion 25, that is formed at a position distant from the joint portion 35. The discharge path 30 that is a discharge flow path of molten glass, is preferably formed at a position as distant as possible from the joint portion 35 for the purpose of preventing corrosion of the joint portion 35.

Here, in fig. 5, the joint portion 35 between the soldier refractories 20, 20 and the joint portion 36 between the crown refractories 21, 21, are present at the same position, but it is not necessary that they are present at the same position. In order to minimize the possibility of leakage of molten glass from the joint portions, the joint portion 35 and the joint portion 36 are preferably present at different positions.

Further, the discharge path 30 is preferably formed at a position distant from the joint portion 36 between crown refractories. However, even when the discharge path 30 is formed at the position of the joint portion 36, since the joint portion 36 is present above the discharge path 30, even if the corrosion resistance of the joint portion 36 against molten glass is lower than that of soldier refractories, it is unlikely that a molten glass leaks out through the joint portion 36 between the crown refractories. Even if leakage of molten glass through the portion occurs, an adverse effect of the leakage is small.

In the soldier refractories 20 etc. shown in Figs. 3 to 5, the number of discharge paths 30 in each soldier refractory 20 is not limited to 1. As the case requires, at least two discharge paths may provided in each soldier refractory 20. Further, it is not necessary to form a discharge path in each of a plurality of soldier refractories 20, 20··· constituting the uppermost portion of the molten glass-accommodating portion shown in Fig. 2. So long as it is possible to sufficiently discharge the molten glass in the discharge groove 28, the construction may be such that the discharge paths are formed in some soldier refractories and not formed in other soldier refractories. For example, the discharge paths may be formed in every other soldier refractories arranged in the horizontal direction.

Glass G to be vacuum-degassed by using the vacuum degassing apparatus 100 of this embodiment, is not particularly restricted in the composition so long as the glass can be produced by heat-melting method. Accordingly, it may be a soda lime silica glass such as soda lime glass or an alkali glass such as alkali-borosilicate glass.

In the case of soda lime glass to be employed for plate glasses for buildings or vehicles, the glass preferably has a composition of, as calculated as mass percentage of the following oxides, from 65 to 75% of SiO₂ , from 0 to 3% of Al₂ O₃ , from 5 to 15% of CaO, from 0 to 15% of MgO, from 10 to 20% of Na₂ O, from 0 to 3% of K₂ O, from 0 to 5% of Li₂ O, from 0 to 3% of Fe₂ O₃, from 0 to 5% of TiO₂ , from 0 to 3% of CeO₂, from 0 to 5% of Ba0, from 0 to 5% of SrO, from 0 to 5% of B₂ O₃, from 0 to 5% of ZnO, from 0 to 5% of ZrO₂ , from 0 to 3% of SnO₂ , and from 0 to 0.3% of SO₃.

In a case of alkali-free borosilicate glass to be employed for substrates of liquid crystal displays, the glass preferably has a composition of, as calculated as mass percentage of the following oxides, from 39 to 70% of SiO₂ , from 3 to 25% of Al₂ O₃, from 1 to 20% of B₂ O, from 0 to 10% of MgO, from 0 to 17% of CaO, from 0 to 20% of SrO, and from 0 to 30% of Ba0. In a case of a mixed alkali glass to be employed for substrates of plasma displays, the glass preferably has a composition of, as calculated as mass percentage of the following oxides, from 50 to 75% of SiO₂ , from 0 to 15% of Al₂ O₃, from 6 to 24% of MgO+CaO+SrO+BaO+ZnO, and from 6 to 24% of Na₂ O+K₂O.

Next, operation of a vacuum degassing apparatus 100 shown in Fig. 1 will be described.

In the vacuum degassing apparatus 100, a molten glass G is supplied to a vacuum degassing vessel 3 in a state that the inside of a housing 2 is maintained to be in a predetermined reduced-pressure state. The pressure inside the housing 2 is maintained to be in a reduced-pressure of, for example, from 51 to 613 hPa (38 to 460 mmHg). The pressure inside the housing 2 is preferably maintained to be in a reduced-pressure of from 80 to 338 hPa (60 to 253 mmHg). A molten glass G that has been melted in a melting tank 1 is supplied from an upstream pit 12 through an uprising pipe 5 to the vacuum degassing vessel 3 in the reduced-pressure state, and the molten glass G is subjected to a reduced-pressure treatment in the vacuum degassing vessel 3 to generate bubbles in the molten glass, and the bubbles are made to move up to the surface of the molten glass G to break them to degas the molten glass. Subsequently, the molten glass G to which the reduced-pressure treatment is completed is fed to a downstream pit 15 through a downfalling pipe 6, and the glass is further fed from the downstream pit 15 to a forming apparatus 200, to form the glass into an objective product shape in the forming apparatus 200.

While the vacuum-degassing of the molten glass G is carried out in the vacuum degassing apparatus 100, the degree of reduced pressure inside the vacuum degassing vessel 3 is maintained to be constant as much as possible, and the temperature of the molten glass G inside the vacuum degassing vessel 3 is controlled to be constant. However, due to various external factors such as a slight pressure change, a temperature change of molten glass or a difference of viscosity between the type of molten glasses, there is a case where a large amount of bubbles are generated in the molten glass G in the reduced pressure state, they moves up to the surface to cause a bumping phenomenon to fill the upper space of molten glass G with a bubble layer and the bubble layer contact with a peripheral wall portion or a lower part of a ceiling portion 3C defining the upper space. In such a case, since an adhered component such as components evaporated from the molten glass G is often adhered to the inner face of crown refractories constituting a wall face of the peripheral portion of the lower part of the ceiling portion 3C defining the upper space, if the bubble layer of molten glass contacts with the wall face, the adhered components are mixed into the molten glass of bubbles, and the molten glass in which the adhered components are mixed flows down along the wall face, and finally flows along the inner face 21 B of crown refractories 21 to reach a storage portion 25 on the upper face of the soldier refractories 20, and flows into the storage portion 25.

The molten glass received in the storage portion 25 reaches a discharge path 30 formed on the back end of the storage portion 25, flows through the discharge path 30 to the outside of the soldier refractory 20, reaches a pocket portion 31, and is received in the pocket portion 31. Accordingly, even if the above adhered components are components of molten glass, it is unlikely that the molten glass containing a large amount of the components returns to the molten glass G during the vacuum degassing treatment in the vacuum degassing vessel 3. Accordingly, the molten glass G in the vacuum degassing vessel 3 is not changed to a molten glass having a poor homogeneity during the vacuum-degassing, and it is possible to maintain a homogeneity of the composition of the molten glass G to be supplied to a forming apparatus 200 for a subsequent step. Further, the present invention provides an effect of realizing production of glass products having a high quality that do not have such a problem of so-called reams that is deformation of transmitted image caused by local refractive index change due to inhomogeneity of glass composition.

When the size of the discharge path 30 is sufficient for discharging a molten glass flowing along a surface of the crown refractories 21 and reaching the storage portion 25 of the soldier refractories 20, there is little risk that the molten glass overflows from the storage portion 25 and returning to a molten glass flowing through the inside of the vacuum degassing vessel 3. In the discharge portion 30, the upper discharge groove 29 has a semicircular cross-section. Here, the cross-sectional shape of the upper discharge groove 29 is preferably a semicircular shape rather than a rectangular shape. The reason is because when a molten glass flows through the discharge path 30, if the upper discharge groove 29 has a quadrangle shape, the molten glass may remain on upper corner portions by the effect of surface tension. Accordingly, the upper discharge groove 29 preferably has a semicircular cross-sectional shape. However, in the present invention, the cross-sectional shape of the upper discharge groove 29 is not particularly limited.

The molten glass flown down along the inside face 21 B of the crown refractories 21 to reach the storage portion 25, is discharged from the storage portion 25 through the discharge path 30 to the outside of the vacuum degassing vessel 3. Here, the molten glass is temporarily stored in the storage portion 25. Accordingly, a joint portion 35 present in the storage portion 25 may be corroded by the molten glass. With respect to this point, in the structure of this embodiment, since a joint portion cover 37 made of a refractory brick is disposed on the backside of the bank portion 23 to protect the joint portion 35 in the storage portion 25, even if the vacuum degassing apparatus 100 is continuously operated for a long time so that the joint portion 35 in the storage portion 25 contacts with the molten glass for a long time, the risk that the joint portion 35 is corroded is reduced. Here, if the joint portion 35 in the storage portion 25 is deeply corroded, a molten glass stored in the storage portion 25 may be returned to the inside of the vacuum degassing vessel 3 again through the corroded portion of the joint portion. Accordingly, the structure wherein the corrosion of the joint portion 35 can be prevented by the joint portion cover 37 is preferred.

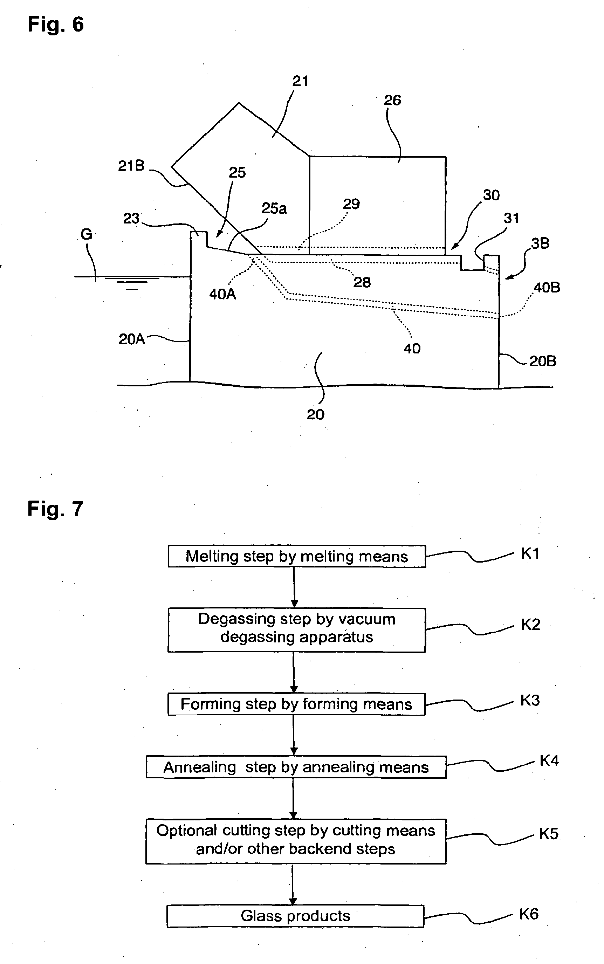

Fig. 6 shows a second embodiment of the storage portion 25 provided in the vacuum degassing apparatus 100 according to the present invention, and the storage portion 25 of this embodiment is characterized by having a bottom face that is a downward slope face 25a from the inside of the vacuum degassing vessel 3 toward the outside, and the structure of the storage portion 25 is equivalent to the structure of the first embodiment other than this point. By forming the bottom face of the storage portion 25 a slope face 25a, it is possible to securely lead a molten glass, that has flown down along the inside face 21 B of the crown refractory 21 and reached the storage portion 25, to the discharge path 30 side, and to discharge the molten glass through the discharge path 30 to the outside of the vacuum degassing vessel 3.

By the way, in the embodiment described prior to this embodiment, a lower discharge groove 28 is formed in the upper face 20 of the soldier refractory 20, and an upper discharge groove 29 is formed in the lower faces of the crown refractory 21 and receiving refractory 26, to constitute a discharge path 30. However, with respect to the discharge path, it is matter of course that so long as lowering of strength of the soldier refractory 20 or the crown refractory 21 is not a problem, the discharge path may be formed in any one of the soldier refractory 20 and the crown refractory 21. Further, as shown in Fig. 6, it is possible to form a discharge path 40 in the soldier refractory 20 so as to have one end 40A opening to the bottom of the storage portion 25 and the other end 40B opening to the outside of the vacuum degassing vessel 3. Of course, both of the discharge path 30 and the discharge path 40 may be provided.

An apparatus for producing glass products according to the present invention is an apparatus comprising the above vacuum degassing apparatus 100; a melting means provided on the upstream side of the vacuum degassing apparatus 100 and for melting a glass material to produce a molten glass; a forming means (forming apparatus )200 provided on the downstream side of the vacuum degassing apparatus 100 and for forming the molten glass; and an annealing means for annealing the formed glass. Here, the melting means, the forming means and the annealing means are within a range of known technique. For example, in the melting means, a glass material adjusted to have a desired composition is input in a melting tank, and the glass material is heated to a predetermined temperature according to the type of glass, for example about 1,400 to 1,600°C in a case of soda lime glass for buildings or vehicles, to melt the glass material to obtain a molten glass. For example, as the forming means, a forming apparatus employing a float method, a fusion method or a download method may be mentioned.

Among the above means, a forming means employing a float bath for a float method, is preferred for the reason that it can produce a large amount of high quality plate glass having a wide range of thickness from a thin plate glass to a thick plate glass.

For example, as the annealing means, an annealing furnace provided with a mechanism for gradually lowering the temperature of a glass after forming, is commonly employed. The mechanism for gradually lowering the temperature supplies a heat, that is controlled by a combustion gas or an electric heater, to necessary portions in a furnace to anneal a formed glass. By this means, it is possible to reduce a residual stress present in a formed glass.

Next, the process for producing plate glass products of the present invention will be described. Fig. 7 is a flow chart of an embodiment of the process for producing glass products of the present invention. The process for producing plate glass products of the present invention is characterized by employing the above vacuum degassing apparatus 100. The process for producing plate glass products of the present invention comprises, for example, a melting step K1 of melting a molten glass by the melting means prior to the above vacuum degassing apparatus 100 to produce a molten glass; a degassing step K2 of carrying out vacuum degassing of the molten glass by the above vacuum degassing apparatus 100; a forming step K3 of forming the molten glass on the downstream side of the vacuum degassing apparatus 100; an annealing step K4 of annealing the molten glass in the subsequent step; and a cutting step K5 of cutting the annealed glass; to obtain glass products K6.

The process for producing glass products of the present invention is within a range of known technique except that the method employs the above vacuum degassing apparatus 100. Further, apparatuses to be employed in the process for producing glass products of the present invention are as described above. Fig. 7 shows the melting step, the forming step and the annealing step, that are constituents of the process for producing glass products of the present invention, and further a cutting step and other backend steps, that are to be employed as the case requires.

The vacuum degassing apparatus, the apparatus for producing glass products and the process for producing glass products of the present invention can be used for production of a wide range of glass products for buildings, vehicles, optical products, medical products and other applications.

### REFERENCE SYMBOLS

100: vacuum degassing apparatus, G: molten glass, 200: forming apparatus, 1: melting tank, 2: housing, 3: vacuum degassing vessel, 3A: bottom wall portion, 3B: peripheral wall portion, 3C: ceiling portion, 5: uprising pipe (feed-in pipe), 6: downfalling pipe (feed-out pipe), 8, 9: outer pipe 12: upstream pit, 15: downstream pit, 20: soldier refractory, 21, 22: crown refractory , 23: bank portion , 25: storage portion , 26: receiving refractory , 28: lower discharge groove, 29: upper discharge groove , 30, 40: discharge path, 31: pocket portion, 35, 36: joint portion, 37: joint-portion cover

## Claims

1. A vacuum degassing apparatus (100) which comprises a vacuum housing (2), the inside of which is evacuated to be in a reduced pressure state; a vacuum degassing vessel (3) provided in the vacuum housing (2) and for carrying out vacuum degassing of a molten glass (G); a feed-in mechanism for feeding a molten glass (G) into the vacuum degassing vessel (3); and a feed-out mechanism for feeding out a degassed molten glass to a subsequent step; wherein the vacuum degassing vessel (3) comprises a bottom wall portion (3A), a side wall portion (3B) and a ceiling portion (3C), that define a molten glass-accommodating portion and an upper space, a wall face defining the molten glass-accommodating portion is constituted by a combination of a plurality of soldier refractories (20) having high corrosion resistance against molten glass, and a side wall (3B) defining the upper space is constituted by a combination of a plurality of crown refractories (21, 22);
wherein among the above plurality of crown refractories (21, 22), a crown refractory (21) provided on an upper face of such a soldier refractory (20) constituting an upper end of the wall face defining the molten glass-accommodating portion, is disposed so that a lower portion of a face of the crown refractory (21) facing to the inside of the vacuum degassing vessel (3) is positioned more outside than the position of a molten-glass-contact surface of the soldier refractory (20), and that a storage portion (25) for molten glass (G) is formed between the upper face of the soldier refractory (20) and a lower portion of the crown refractory (21) disposed on the soldier refractory (20);
wherein a discharge path (30) for molten glass (G) communicating with the storage portion (25) and the outside of the vacuum degassing vessel (3), is formed in at least one of a portion of the soldier refractory (20) and a portion of the crown refractory (21); and
wherein a bank portion (23) is formed on the edge of the storage portion (25) formed on the upper face of the soldier refractory (20), facing the molten glass-accommodating portion.

2. The vacuum degassing apparatus (100) according to Claim 1, wherein a groove communicating with the storage portion (25) and the outside of the vacuum degassing vessel (3) is formed in each of the upper face portion of the soldier refractory (20) on which the crown refractory (21) is disposed and the lower face portion of the crown refractory (21), and both of the grooves communicate with each other to constitute the discharge path (30) of molten glass (G).

3. The vacuum degassing apparatus (100) according to Claim 1 or 2, wherein the crown refractory (21) facing the storage portion (25) has a lower part having an inner face descending toward the outside of the vacuum degassing vessel (3), and an end of the discharge path (30) opens at a portion where the inner wall meets the soldier refractory (20).

4. The vacuum degassing apparatus (100) according to Claim 2 or 3, wherein the groove (29) formed in the upper face side of the soldier refractory (20) is a rectangular groove having a rectangular cross section, and the groove (28) formed in the lower face side of the crown refractory (21) is a circular groove having a semicircular cross section having a width larger than the width of the rectangular cross section.

5. The vacuum degassing apparatus (100) according to any one of Claims 1 to 4, wherein the discharge path (30) of molten glass (G) is formed so as to keep away from a joint portion formed between adjacent soldier refractories (20).

6. The vacuum degassing apparatus (100) according to any one of Claims 1 to 5, wherein a joint-portion cover is disposed on a surface portion of a joint portion between the soldier refractories (20), in the storage portion (25) formed on the upper face of the soldier refractories (20).

7. The vacuum degassing apparatus (100) according to any one of Claims 1 to 6, wherein the storage portion (25) formed on the upper face of the soldier refractory (20) has a slope face descending toward the outside of the vacuum degassing vessel (3).

8. The vacuum degassing apparatus (100) according to any one of Claims 1 to 7, wherein a pocket portion (31) for receiving a molten glass (G) discharged through the discharge path (30), is formed on the outside of the soldier refractory (20).

9. A vacuum degassing method for molten glass (G), which employs the vacuum degassing apparatus (100) as defined in any one of Claims 1 to 8.

10. A vacuum degassing method for molten glass (G), which is a method for vacuum degassing a molten glass (G) by employing the vacuum degassing apparatus (100) as defined in any one of Claims 1 to 8, which comprises discharging a bubble layer produced in the vacuum degassing vessel (3) to the outside of the vacuum degassing vessel (3).

11. An apparatus for producing glass products, which comprises the vacuum degassing apparatus (100) as defined in any one of Claims 1 to 8; a melting means provided on the upstream side of the vacuum degassing apparatus (100) and for melting a glass material to produce a molten glass (G); a forming means provided on the downstream side of the vacuum degassing apparatus (100) and for forming the molten glass (G); and an annealing means for annealing the formed glass.

12. A process for producing glass products, which comprises a step of applying a degassing treatment to a molten glass (G) by the vacuum degassing apparatus (100) as defined in any one of Claims 1 to 8; a melting step of melting a glass material on the upstream side of the vacuum degassing apparatus (100) to produce a molten glass (G); a forming step of forming the molten glass (G) on the downstream side of the vacuum degassing apparatus (100); and an annealing step of annealing the formed glass.

13. A process for producing glass products, which comprises a step of applying a degassing treatment to a molten glass (G) by the vacuum degassing apparatus (100) as defined in any one of Claims 1 to 8; a melting step of melting a glass material on the upstream side of the vacuum degassing apparatus (100) to produce a molten glass (G); a forming step of forming the molten glass (G) on the downstream side of the vacuum degassing apparatus (100); and an annealing step of annealing the formed glass; the process further comprising discharging a bubble layer produced in the vacuum degassing vessel (3) in the step of applying a degassing treatment to the molten glass (G), to the outside of the vacuum degassing vessel (3).

## Patentansprüche

1. Vakuumentgasungsvorrichtung (100), die ein Vakuumgehäuse (2), dessen Inneres evakuiert wird, so dass es in einem Zustand eines verminderten Drucks vorliegt, einen Vakuumentgasungsbehälter (3), der in dem Vakuumgehäuse (2) bereitgestellt ist und zur Durchführung einer Vakuumentgasung eines geschmolzenen Glases (G) dient, einen Zuführungsmechanismus zum Zuführen eines geschmolzenen Glases (G) in den Vakuumentgasungsbehälter (3) und einen Austragmechanismus zum Austragen eines entgasten geschmolzenen Glases zu einer nachfolgenden Stufe umfasst,
wobei der Vakuumentgasungsbehälter (3) einen unteren Wandabschnitt (3A), einen Seitenwandabschnitt (3B) und einen oberen Abschnitt (3C) umfasst, die einen Abschnitt zum Aufnehmen eines geschmolzenen Glases und einen oberen Raum festlegen, wobei eine Wandfläche, die den Abschnitt zum Aufnehmen eines geschmolzenen Glases festlegt, durch eine Kombination einer Mehrzahl von Palisadensteinen (20) ausgebildet ist, die eine hohe Korrosionsbeständigkeit gegen geschmolzenes Glas aufweisen, und wobei eine Seitenwand (3B), die den oberen Raum festlegt, durch eine Kombination einer Mehrzahl von Kronensteinen (21, 22) ausgebildet ist, wobei von der vorstehend genannten Mehrzahl von Kronensteinen (21, 22) ein Kronenstein (21), der auf einer oberen Fläche eines solchen Palisadensteins (20) bereitgestellt ist, die ein oberes Ende der Wandfläche bildet, die den Abschnitt zum Aufnehmen eines geschmolzenen Glases festlegt, so angeordnet ist, dass ein unterer Abschnitt einer Fläche des Kronensteins (21), der auf das Innere des Vakuumentgasungsbehälters (3) gerichtet ist, mehr außerhalb als die Position einer geschmolzenes Glas-Kontaktoberfläche des Palisadensteins (20) positioniert ist, und dass ein Aufnahmeabschnitt (25) für geschmolzenes Glas (G) zwischen der oberen Fläche des Palisadensteins (20) und einem unteren Abschnitt des Kronensteins (21), der auf dem Palisadenstein (20) angeordnet ist, ausgebildet ist,
wobei ein Austragweg (30) für geschmolzenes Glas (G), der mit dem Aufnahmeabschnitt (25) und dem Äußeren des Vakuumentgasungsbehälters (3) in Verbindung steht, in mindestens einem eines Abschnitts des Palisadensteins (20) und eines Abschnitts des Kronensteins (21) ausgebildet ist, und
wobei ein Wallabschnitt (23) auf der Kante des Aufnahmeabschnitts (25) ausgebildet ist, der auf der oberen Fläche des Palisadensteins (20) ausgebildet ist, und auf den Abschnitt zum Aufnehmen eines geschmolzenen Glases gerichtet ist.

2. Vakuumentgasungsvorrichtung (100) nach Anspruch 1, bei der eine Rille, die mit dem Aufnahmeabschnitt (25) und dem Äußeren des Vakuumentgasungsbehälters (3) in Verbindung steht, in jedem des oberen Flächenabschnitts des Palisadensteins (20), auf dem der Kronenstein (21) angeordnet ist, und des unteren Flächenabschnitts des Kronensteins (21) ausgebildet ist, und beide Rillen miteinander in Verbindung stehen, so dass der Austragweg (30) für geschmolzenes Glas (G) gebildet wird.

3. Vakuumentgasungsvorrichtung (100) nach Anspruch 1 oder 2, bei welcher der Kronenstein (21), der auf den Aufnahmeabschnitt (25) gerichtet ist, einen unteren Teil aufweist, der eine Innenfläche aufweist, die in die Richtung des Äußeren des Vakuumentgasungsbehälters (3) abfällt, und wobei sich ein Ende des Austragwegs (30) an einem Abschnitt öffnet, bei dem die Innenwand den Palisadenstein (20) berührt.

4. Vakuumentgasungsvorrichtung (100) nach Anspruch 2 oder 3, bei der die Rille (29), die in der oberen Flächenseite des Palisadensteins (20) ausgebildet ist, eine rechteckige Rille ist, die einen rechteckigen Querschnitt aufweist, und die Rille (28), die in der unteren Flächenseite des Kronensteins (21) ausgebildet ist, eine kreisförmige Rille ist, die einen halbkreisförmigen Querschnitt aufweist, der eine größere Breite als die Breite des rechteckigen Querschnitts aufweist.

5. Vakuumentgasungsvorrichtung (100) nach einem der Ansprüche 1 bis 4, bei welcher der Austragweg (30) für geschmolzenes Glas (G) so ausgebildet ist, dass er von einem Verbindungsabschnitt entfernt ist, der zwischen benachbarten Palisadensteinen (20) ausgebildet ist.

6. Vakuumentgasungsvorrichtung (100) nach einem der Ansprüche 1 bis 5, bei der eine Verbindungsabschnittabdeckung auf einem Oberflächenabschnitt eines Verbindungsabschnitts zwischen den Palisadensteinen (20) in dem Aufnahmeabschnitt (25) angeordnet ist, der auf der oberen Fläche der Palisadensteine (20) ausgebildet ist.

7. Vakuumentgasungsvorrichtung (100) nach einem der Ansprüche 1 bis 6, bei welcher der Aufnahmeabschnitt (25), der auf der oberen Fläche des Palisadensteins (20) ausgebildet ist, eine geneigte Fläche aufweist, die in die Richtung des Äußeren des Vakuumentgasungsbehälters (3) abfällt.

8. Vakuumentgasungsvorrichtung (100) nach einem der Ansprüche 1 bis 7, bei der ein Taschenabschnitt (31) zum Aufnehmen eines geschmolzenen Glases (G), das durch den Austragweg (30) ausgetragen wird, auf dem Äußeren des Palisadensteins (20) ausgebildet ist.

9. Vakuumentgasungsverfahren für geschmolzenes Glas (G), bei dem die Vakuumentgasungsvorrichtung (100) nach einem der Ansprüche 1 bis 8 eingesetzt wird.

10. Vakuumentgasungsverfahren für geschmolzenes Glas (G), bei dem es sich um ein Verfahren zum Vakuumentgasen eines geschmolzenen Glases (G) durch Einsetzen der Vakuumentgasungsvorrichtung (100) nach einem der Ansprüche 1 bis 8 handelt, und welches das Austragen einer Blasenschicht, die in dem Vakuumentgasungsbehälter (3) erzeugt worden ist, aus dem Vakuumentgasungsbehälter (3) umfasst.

11. Vorrichtung zur Herstellung von Glasprodukten, welche die Vakuumentgasungsvorrichtung (100) nach einem der Ansprüche 1 bis 8, eine Schmelzeinrichtung, die auf der stromaufwärtigen Seite der Vakuumentgasungsvorrichtung (100) bereitgestellt ist und zum Schmelzen eines Glasmaterials zum Erzeugen eines geschmolzenen Glases (G) dient, eine Formeinrichtung, die auf der stromabwärtigen Seite der Vakuumentgasungsvorrichtung (100) bereitgestellt ist und zum Formen des geschmolzenen Glases (G) dient, und eine Tempereinrichtung zum Tempern des geformten Glases umfasst.

12. Verfahren zur Herstellung von Glasprodukten, das einen Schritt des Anwendens einer Entgasungsbehandlung auf ein geschmolzenes Glas (G) durch die Vakuumentgasungsvorrichtung (100) nach einem der Ansprüche 1 bis 8, einen Schmelzschritt des Schmelzens eines Glasmaterials auf der stromaufwärtigen Seite der Vakuumentgasungsvorrichtung (100) zum Erzeugen eines geschmolzenen Glases (G), einen Formschritt des Formens des geschmolzenen Glases (G) auf der stromabwärtigen Seite der Vakuumentgasungsvorrichtung (100) und einen Temperschritt des Temperns des geformten Glases umfasst.

13. Verfahren zur Herstellung von Glasprodukten, das einen Schritt des Anwendens einer Entgasungsbehandlung auf ein geschmolzenes Glas (G) durch die Vakuumentgasungsvorrichtung (100) nach einem der Ansprüche 1 bis 8, einen Schmelzschritt des Schmelzens eines Glasmaterials auf der stromaufwärtigen Seite der Vakuumentgasungsvorrichtung (100) zum Erzeugen eines geschmolzenen Glases (G), einen Formschritt des Formens des geschmolzenen Glases (G) auf der stromabwärtigen Seite der Vakuumentgasungsvorrichtung (100) und einen Temperschritt des Temperns des geformten Glases umfasst, wobei das Verfahren ferner das Austragen einer Blasenschicht, die in dem Vakuumentgasungsbehälter (3) in dem Schritt des Anwendens einer Entgasungsbehandlung auf das geschmolzene Glas (G) erzeugt worden ist, aus dem Vakuumentgasungsbehälter (3) umfasst.

## Revendications

1. Appareil de dégazage sous vide (100) qui comprend une enceinte sous vide (2) dans laquelle est fait le vide pour être dans un état de pression réduite ; un caisson de dégazage sous vide (3) qui est disposé dans l'enceinte sous vide (2) et qui est destiné à réaliser un dégazage sous vide d'un verre fondu (G) ; un mécanisme d'alimentation pour amener un verre fondu (G) dans le caisson de dégazage sous vide (3) ; et un mécanisme de sortie pour faire sortir un verre fondu dégazé en direction d'une étape suivante ;
étant précisé que le caisson de dégazage sous vide (3) comprend une partie formant paroi inférieure (3A), une partie formant paroi latérale (3B) et une partie formant plafond (3C) qui définissent une partie de réception de verre fondu et un espace supérieur, qu'une face de paroi définissant la partie de réception de verre fondu est constituée par une combinaison de plusieurs éléments réfractaires en palissade (20) à haute résistance à la corrosion, par rapport au verre fondu, et qu'une face latérale (3B) définissant l'espace supérieur est constituée par une combinaison de plusieurs éléments réfractaires de voûte (21, 22) ;
que parmi lesdits éléments réfractaires de voûte (21, 22), un élément réfractaire de voûte (21) disposé sur une surface supérieure d'un tel élément réfractaire en palissade (20) constituant une extrémité supérieure de la face de paroi définissant la partie de réception de verre fondu, est disposé de telle sorte qu'une partie inférieure d'une face de l'élément réfractaire de voûte (21) qui fait face à l'intérieur du caisson de dégazage sous vide (3) soit située plus à l'extérieur que la position d'une surface de contact de verre fondu de l'élément réfractaire en palissade (20), et qu'une partie de stockage (25) pour le verre fondu (G) est formée entre la face supérieure de l'élément réfractaire en palissade (20) et une partie inférieure de l'élément réfractaire de voûte (21) disposé sur l'élément réfractaire en palissade (20) ;
qu'un passage de sortie (30) pour le verre fondu (G) qui communique avec la partie de stockage (25) et l'extérieur du caisson de dégazage sous vide (3) est formé dans une partie de l'élément réfractaire en palissade (20) et/ou une partie de l'élément réfractaire de voûte (21) ; et
qu'une partie rehaussée (23) est formée sur le bord de la partie de stockage (25) formée sur la face supérieure de l'élément réfractaire en palissade (20) qui fait face à la partie de réception de verre fondu.

2. Appareil de dégazage sous vide (100) selon la revendication 1, étant précisé que des rainures qui communiquent avec la partie de stockage (25) et l'extérieur du caisson de dégazage sous vide (3) sont formées respectivement dans la partie de face supérieure de l'élément réfractaire en palissade (20) sur laquelle est disposé l'élément réfractaire de voûte (21), et dans la partie de face inférieure de l'élément réfractaire de voûte (21), et les deux rainures communiquent afin de constituer le passage de sortie (30) du verre fondu (G).

3. Appareil de dégazage sous vide (100) selon la revendication 1 ou 2, étant précisé que l'élément réfractaire de voûte (21) qui fait face à la partie de stockage (25) a une partie inférieure présentant une face intérieure qui descend vers l'extérieur du caisson de dégazage sous vide (3), et qu'une extrémité du passage de sortie (30) s'ouvre sur une partie où la paroi intérieure rejoint l'élément réfractaire en palissade (20).

4. Appareil de dégazage sous vide (100) selon la revendication 2 ou 3, étant précisé que la rainure (29) formée côté face supérieure de l'élément réfractaire en palissade (20) est une rainure rectangulaire qui présente une section transversale rectangulaire, et que la rainure (28) formée côté face inférieure de l'élément réfractaire de voûte (21) est une rainure circulaire qui présente une section transversale semi-circulaire d'une largeur supérieure à la largeur de la section transversale rectangulaire.

5. Appareil de dégazage sous vide (100) selon l'une quelconque des revendications 1 à 4, étant précisé que le passage de sortie (30) du verre fondu (G) est formé de manière à rester éloigné d'une partie de joint entre des éléments réfractaires en palissade (20) voisins.

6. Appareil de dégazage sous vide (100) selon l'une quelconque des revendications 1 à 5, étant précisé qu'un couvre-joint est disposé sur une partie de surface d'une partie de joint entre les éléments réfractaires en palissade (20), dans la partie de stockage (25) formée sur la face supérieure des éléments réfractaires en palissade (20).

7. Appareil de dégazage sous vide (100) selon l'une quelconque des revendications 1 à 6, étant précisé que la partie de stockage (25) formée sur la face supérieure de l'élément réfractaire en palissade (20) présente une face inclinée qui descend vers l'extérieur du caisson de dégazage sous vide (3).

8. Appareil de dégazage sous vide (100) selon l'une quelconque des revendications 1 à 7, étant précisé qu'une partie formant poche (31) destinée à recevoir un verre fondu (G) qui sort par le passage de sortie (30) est formée sur l'extérieur de l'élément réfractaire en palissade (20)

9. Procédé de dégazage sous vide pour du verre fondu (G), qui utilise l'appareil de dégazage sous vide (100) tel qu'il est défini dans l'une quelconque des revendications 1 à 8.

10. Procédé de dégazage sous vide pour du verre fondu (G), qui est un procédé pour dégazer sous vide un verre fondu (G) en utilisant l'appareil de dégazage sous vide (100) tel qu'il est défini dans l'une quelconque des revendications 1 à 8, qui comprend l'évacuation, vers l'extérieur du caisson de dégazage sous vide (3), d'une couche de bulles produite dans le caisson de dégazage sous vide (3).

11. Appareil pour produire des produits en verre, qui comprend l'appareil de dégazage sous vide (100) tel qu'il est défini dans l'une quelconque des revendications 1 à 8 ; des moyens de fusion qui sont disposés côté amont de l'appareil de dégazage sous vide (100) et qui sont destinés à faire fondre un matériau de verre afin de produire un verre fondu (G) ; des moyens de façonnage qui sont disposés côté aval de l'appareil de dégazage sous vide (100) et qui sont destinés à façonner le verre fondu (G) ; et des moyens de recuit pour recuire le verre façonné.

12. Procédé pour produire des produits en verre, qui comprend une étape d'application d'un traitement de dégazage à un verre fondu (G) à l'aide de l'appareil de dégazage sous vide (100) tel qu'il est défini dans l'une quelconque des revendications 1 à 8 ; une étape de fusion d'un matériau de verre sur le côté amont de l'appareil de dégazage sous vide (100) afin de produire un verre fondu (G) ; une étape de façonnage du verre fondu (G) sur le côté aval de l'appareil de dégazage sous vide (100) ; et une étape de recuit du verre façonné.

13. Procédé pour produire des produits en verre, qui comprend une étape d'application d'un traitement de dégazage à un verre fondu (G) à l'aide de l'appareil de dégazage sous vide (100) tel qu'il est défini dans l'une quelconque des revendications 1 à 8 ; une étape de fusion d'un matériau de verre sur le côté amont de l'appareil de dégazage sous vide (100) afin de produire un verre fondu (G) ; une étape de façonnage du verre fondu (G) sur le côté aval de l'appareil de dégazage sous vide (100) ; et une étape de recuit du verre façonné ; le procédé comprenant par ailleurs l'évacuation, vers l'extérieur du caisson de dégazage sous vide (3), d'une couche de bulles produite dans le caisson de dégazage sous vide (3) lors de l'étape de l'application d'un traitement de dégazage au verre fondu (G).
